# EUROPÄISCHE PATENTSCHRIFT

(11) **EP 2 118 338 B1**
(45) Veröffentlichungstag und Bekanntmachung des Hinweises auf die Patenterteilung: **05.01.2011**
(21) Anmeldenummer: 07822559.6
(22) Anmeldetag: 13.11.2007
(51) Int. Cl.: C23C 22/86, C02F 9/02, C02F 9/04, C02F 1/42, C02F 1/44, C02F 1/66

(54) **VERFAHREN ZUR GEWINNUNG VON ENTSALZTEM WASSER AUS ZIRKONIUM-HALTIGEM SPÜLWASSER**
PROCESS FOR OBTAINING DESALTED WATER FROM ZIRCONIUM-CONTAINING WASH WATER
PROCÉDÉ DE PRODUCTION D'EAU DESSALÉE À PARTIR D'EAU DE RINÇAGE CONTENANT DU ZIRCON

(30) Priorität: 05.02.2007 DE 102007006450
(43) Veröffentlichungstag der Anmeldung: 18.11.2009
(73) Patentinhaber: Henkel AG & Co. KGaA, 40589 Düsseldorf (DE)
(72) Erfinder: BROUWER, Jan-Willem, 47877 Willich (DE); KRÖMER, Jens, 40225 Düsseldorf (DE)
(86) Internationale Anmeldenummer: PCT/EP2007/062290
(87) Internationale Veröffentlichungsnummer: WO 2008/095555

(56) Entgegenhaltungen:
- EP-A- 0 461 686
- WO-A-2004/063424
- DE-A1- 10 341 232
- DE-A1- 19 733 972

## Beschreibung

Bei der schichtbildenden Phosphatierung von Metallen zum Korrosionsschutz wird nach der Phosphatierung häufig mit wässrigen Lösungen nachgespült, die komplexe Zirkonium-Fluoride enthalten. Diese sogenannte "Nachspülung" oder "Nachpassivierung" verbessert den durch die Phosphatschicht bewirkten Korrosionsschutz. Nach diesem Schritt der Nachpassivierung werden die so behandelten Metalloberflächen mit Wasser gespült. Hierdurch fällt Zirkonium-haltiges Spülwasser an, das bisher der Abwasserbehandlung zugeführt wurde.

Spülwasser aus Phosphatierverfahren, das Schwermetalle und bei einer entsprechenden Nachpassivierung auch Zirkonium enthält, wird üblicherweise durch Versetzen mit einer Suspension von Calciumhydroxid ("Kalkmitch") behandelt (siehe z.B. die Europäische Patentanmeldung EP0461686A1). Die Konzentration von teilweise gelöstem, überwiegend jedoch ungelöst suspendiertem Calciumhydroxid in diesen Suspensionen liegt üblicherweise im Bereich von 10 Gew.%. Der pH-Wert des Spülwassers steigt hierbei auf einen Bereich von etwa 9 bis etwa 11 an. Im Spülwasser gelöste Schwermetall- und Zirkoniumionen fallen hierbei als Hydroxide und Phosphate aus und werden zusammen mit überschüssigem Calciumhydroxid als Schlamm abgetrennt. Wegen des Überschusses an gelösten Calciumionen sowie an OH⁻-Ionen beträgt der Leitwert im so vorgeklärten Abwasser in der Regel etwa 1000 bis etwa 10000 µS/cm. Das so vorgeklärte Spülwasser wird, erforderlichenfalls nach Neutralisation, der Kläranlage zugeführt. Auf diese Weise wird Spülwasser aus dem Wasserkreislauf der Phosphatieranlage ausgetragen und verursacht Entsorgungskosten. Entsprechend muss der Wasserkreislauf mit Frischwasser ergänzt werden, was ebenfalls Kosten verursacht. Wegen der hohen lonenbelastung des Spülwassers nach der Kalkmilch-Fällung, die sich im hohen Leitwert wiederspiegelt, ist es nicht wirtschaftlich, durch beispielsweise lonenaustausch oder Umkehrosmose salzarmes oder entsalztes Wasser herzustellen, das im Wasserkreislauf der Phosphatieranlage wieder verwendet werden kann. Die vorliegende Erfindung stellt sich die Aufgabe, ein Verfahren zur Verfügung zu stellen, mit dem Zirkonium-haltiges Spülwasser so aufbereitet werden kann, dass es im Phosphatierprozess als Spülwasser wieder verwendet werden kann.

Der Gegenstand der vorliegenden Erfindung ist ein Verfahren zur Gewinnung von entsalztem Wasser aus Zirkonium-haltigem Spülwasser mit einem pH-Wert kleiner als 6,0, wobei man
a) das Spülwasser mit einer solchen Menge einer wässrigen Lösung von Ca(OH)₂, die nicht mehr als 0,1 Gew.-% ungelöstes Ca(OH)₂ enthält, versetzt, dass der pH-Wert des Spülwassers auf einen Wert im Bereich von 6,2 bis 8,0 ansteigt,
b)einen sich bildenden Niederschlag aus dem Spülwasser abtrennt und
c) das im Schritt b) von dem Niederschlag befreite Spülwasser einem lonenaustauschverfahren oder einer Umkehrosmose unterwirft.

Zirkonium-haltige Nachspüllösungen nach einer Phosphatierung sind schwach sauer eingestellt. Spült man die nach der Nachpassivierung an der Metalloberfläche noch anhaftende Nachpassivierungslösung mit Wasser ab, hat das so erhaltene Wasser einen pH-Wert kleiner als 6,0. Im erfindungsgemäßen Verfahren versetzt man dieses Spülwasser nicht wie im Stand der Technik mit Kalkmilch, die eine große Menge an ungelöstem Calciumhydroxid enthält, sondern mit einer wässrigen Lösung von Calciumhydroxid, die nicht mehr als 0,1 Gew.-% ungelöstes Ca(OH)₂ enthält. Vorzugsweise enthält diese wässrige Lösung überhaupt kein ungelöstes Ca(OH)₂ und erscheint dem Auge hierdurch vollständig klar. Vorzugsweise liegt der Gehalt an Ca(OH)₂ der wässrigen Lösung im Bereich von 0,2 bis 0,01 Gew.-%.

Erfindungsgemäß gibt man dem Zirkonium-haltigen Spülwasser lediglich eine solche Menge an einer wässrigen Lösung von Ca(OH)₂ zu, dass der pH-Wert des Spülwassers nur auf einen Wert im Bereich von 6,2 bis 8,0, insbesondere auf einen Wert im Bereich von 6,5 bis 7,5 ansteigt. Ein pH-Wert von etwa 9 bis etwa 11, wie er bei einer klassischen Kalkmilch-Fällung nach Stand der Technik üblich ist, wird also erfindungsgemäß vermieden. Es hat sich gezeigt, dass trotz dieses geringen pH-Werts im Bereich von 6,2 bis 8,0 und der entsprechend geringen zugegebenen Menge an Calciumhydroxid die Zirkonium-Ionen des Spülwassers in einem sich bildenden Niederschlag weitgehend ausfallen. Dieser sich bildende Niederschlag wird aus dem Spülwasser abgetrennt. Dies ist mit konventionellen Techniken wie Filtrieren oder Zentrifugieren möglich. Beispielsweise können hierfür Beutel- oder Kiesfilter eingesetzt werden. Das auf diese Weise von dem Zirkonium-haltigem Niederschlag befreite Spülwasser kann nun einem an sich bekannten Verfahren unterzogen werden, das weitgehend salzarmes oder entsalztes Wasser liefert. Dies kann ein Ionenaustauschverfahren oder eine Umkehrosmose sein, die als solche im Stand der Technik zum Entsalzen von Wasser bekannt sind.

Demgegenüber ist es ohne die erfindungsgemäße Abtrennung von Zirkonium-lonen aus dem Spülwasser nicht möglich, aus dem unbehandelten Zirkonium-haltigem Spülwasser durch Ionenaustauschverfahren oder Umkehrosmose entsalztes Wasser herzustellen. Zwar gelingt dies kurzfristig, jedoch hat sich gezeigt, dass bei einer Zirkonium-Konzentration im unbehandelten Spülwasser in der Größenordnung von etwa 2 bis 10 mg/l lonenaustauscherharze oder Umkehrosmose-Membranen rasch verblocken. Dies kann auf die Bildung Zirkonium-haltiger Niederschläge beim Aufkonzentrieren der Zirkonium-lonen zurückgeführt werden. Nach der erfindungsgemäßen Behandlung weist das von Zirkonium-lonen befreite Spülwasser noch einen Zirkonium-Gehalt von unterhalb 0,1 mg/l auf. Bei der weitergehenden Entsalzung dieses Spülwassers mit lonenaustauschverfahren oder Umkehrosmose wurde in praxisrelevanten Standzeiten keine Verblockung beobachtet.

Vorzugsweise steuert man im Schritt a) die Zugabe der Ca(OH)₂-Lösung so, dass möglichst ein pH-Wert von 7,0 erreicht wird. Dies kann automatisch über eine Mess- und Dosiereinheit gesteuert werden, die eine pH-Elektrode enthält. Eine manuelle Steuerung des Verfahrens ist also nicht erforderlich, was die Wirtschaftlichkeit erhöht. Es hat sich in Versuchen gezeigt, dass bis zum Erreichen des angestrebten pH-Werts lediglich eine solche Menge an wässriger Lösung von Ca(OH)₂ zugegeben werden muss, dass das Spülwasser eine elektrische Leitfähigkeit von nicht mehr als 200 µS/cm, ja sogar von nicht mehr als 100 µS/cm aufweist. Diese geringen Leitwerte weisen auf eine geringe lonenkonzentration hin, so dass die genannten Entsalzungsverfahren wirtschaftlich eingesetzt werden können.

Im erfindungsgemäßen Verfahren verwendet man vorzugsweise eine wässrige Lösung von Ca(OH)₂, die 0,01 bis 0,14 Gew.%, insbesondere 0,05 bis 0,12 Gew.-% Ca(OH)₂ enthält. Diese Konzentrationen sind besonders günstig, um bei pH-gesteuerter automatischer Dosierung die erfindungsgemäß angestrebten Grenzwerte von pH-Wert und elektrischer Leitfähigkeit einzuhalten.

Für das erfindungsgemäße Verfahren ist es prinzipiell gleichgültig, bei welchem Prozess das zu behandelnde Zirkonium-haltige Spülwasser angefallen ist. Das erfindungsgemäße Verfahren wurde für Spülwasser entwickelt und überprüft, das bei einer Phosphatierung von Metalloberflächen und einer Nachpassivierung mit Zirkonium-haltigen Nachpassivierunglösungen angefallen ist. Demnach ist das erfindungsgemäße Verfahren vorzugsweise **dadurch gekennzeichnet, dass** es sich bei dem Spülwasser um ein Spülwasser handelt, das bei der Spülung von Metalloberflächen anfällt, die nach einer Phosphatierung mit einer Zirkonium-haltigen Passivierungslösung behandelt wurden. Für solche Spülwässer ist es charakteristisch, dass es vor der erfindungsgemäßen Behandlung eine Zirkonium-Konzentration im Bereich von 0,5 bis 20 mg/l und insbesondere im Bereich von 1 bis 10 mg/l aufweist. Beispielsweise kann das Spülwasser vor der erfindungsgemäßen Behandlung einen Zirkonium-Gehalt im Bereich von 2 mg/l aufweisen.

Der wirtschaftliche Wert der vorstehenden Erfindung liegt darin, dass Zirkonium-haltiges Spülwasser nicht wie bisher aus dem Prozess ausgeschleust und entsorgt werden muss, sondern dass es zu entsalztem Wasser aufbereitet und im Produktionsprozess wieder eingesetzt werden kann. Daher ist es besonders wirtschaftlich, das im Schritt c) erhaltene entsalzte Wasser für den Ansatz von Prozesslösungen oder für die Spülung von Metalloberflächen im Zuge eines Verfahrens zur Konversionsbehandlung, insbesondere zur Phosphatierung zu verwenden.

Der Vorteil der vorliegenden Erfindung liegt also darin, dass weniger Abwasser aus Prozessen zur Metalloberflächenbehandlung ausgeschleust und entsprechend weniger Frischwasser zugeführt werden muss. Dies schont Ressourcen und erhöht die Wirtschaftlichkeit.

### Ausführungsbeispiele

Zunächst wurde überprüft, ob das in der Praxis anfallende Spülwasser nach einer Nachpassivierung von phosphatierten Metalloberflächen mit einer Zirkonium-haltigen Nachpassivierung ohne weitere Behandlung durch lonenaustauscher entsalzt werden kann. - Dabei entstand jedoch auf dem Anionenaustauscher-Harz eine weißliche Färbung, die auf eine Bildung Zirkonium-haltiger Niederschläge hinweist. Dies dürfte bereits nach kurzer Standzeit zu einer Verblockung der Anionenaustauscher-Säule führen. Basierend auf dieser Beobachtung wurde anschließend versucht, durch Vorbehandlung des Spülwassers dessen Zirkonium-Gehalt zu verringern. Nach der gesuchten Vorbehandlung sollte der Gehalt an gelösten Ionen im Spülwasser jedoch so gering bleiben, dass der Leitwert des Spülwassers einen Wert von 200 µS/cm, insbesondere von 100 µS/cm nicht überschreitet. Hierdurch sollte eine wirtschaftliche weitere Entsalzung ermöglicht werden.

In den weiteren Versuchen wurde ein Praxis-Spülwasser eingesetzt, das nach der Phosphatierung und anschließender Nachpassivierung mit einer Zirkonium-haltigen Nachpassivierungslösung anfiel. Dieses Spülwasser hatte einen pH-Wert von 4,0, einen Leitwert von 48 µS/cm und einen Zirkonium-Gehalt von 2,0 mg/l. In einem Vergleichsversuch wurde diesem Spülwasser eine solche Menge an 10 %-iger Na(OH)-Lösung zugegeben, dass der pH-Wert auf 7,1 anstieg. Das Spülwasser hatte dann einen Leitwert von 153 µS/cm. Der Zirkonium-Gehalt blieb dabei unverändert. Dieser Vergleichsversuch zeigt, dass ein einfaches Anheben des pH-Werts in den neutralen Bereich nicht ausreicht, um ZirkoniumIonen aus dem Spülwasser auszufällen.

In einem Versuch gemäß erfindungsgemäßem Verfahren wurde dem Original-Spülwasser eine solche Menge an 0,1 %iger Lösung von Ca(OH)₂ zugegeben, dass der pH-Wert auf 7,0 anstieg. Das Spülwasser hatte dann einen Leitwert von 86 µS/cm. Nach Abfiltrieren des entstandenen Niederschlags über ein Blauband-Filter hatte das Spülwasser noch einen Zirkonium-Gehalt von kleiner als 0,1 mg/l. Dieses vorbehandelte Spülwasser konnte problemlos durch Ionenaustausch weiter entsalzt werden, ohne dass nach praxisrelevanten Betriebszeiten eine weißliche Verfärbung des Anionenaustauschers beobachtet wurde.

In einem weiteren Vergleichsversuch wurde das Spülwasser gemäß Stand der Technik mit einer 10 %igen Suspension von Ca(OH)₂ versetzt. Die Zugabe wurde gestoppt, nachdem ein pH-Wert von 7 erreicht war. Zu diesem Zeitpunkt war das Lösungsgleichgewicht der Suspension jedoch noch nicht wieder eingestellt. Vielmehr stieg der pH-Wert mit der Zeit auch ohne Zugabe von weiterer Ca(OH)₂-Suspension auf 10,4 an, was durch ein weiteres Auflösen von suspendierte Ga(OH)₂ erklärt werden kann. Nach Abfiltrieren des evtl. entstandenen Niederschlags und des ungelösten Ca(OH)₂ hatte das Spülwasser zwar ebenfalls nur noch einen Zirkonium-Gehalt von kleiner als 0,1 mg/l, der Leitwert betrug jedoch 298 µS/cm. Der im Vergleich zum erfindungsgemäßen Verfahren höhere Leitwert, der auf einen höheren Gehalt an gelösten Ionen hinweist, macht die weitere Entsalzung dieses Spülwassers durch lonenaustausch oder Umkehrosmose weniger wirtschaftlich.

## Patentansprüche

1. Verfahren zur Gewinnung von entsalztem Wasser aus Zirkonium-haltigem Spülwasser mit einem pH-Wert kleiner als 6,0, wobei man
a) das Spülwasser mit einer solchen Menge einer wässrigen Lösung von Ca(OH)₂, die nicht mehr als 0,1 Gew.-% ungelöstes Ca(OH)₂ enthält, versetzt, dass der pH-Wert des Spülwassers auf einen Wert im Bereich von 6,2 bis 8,0 ansteigt,
b) einen sich bildenden Niederschlag aus dem Spülwasser abtrennt und
c) das im Schritt b) von dem Niederschlag befreite Spülwasser einem Ionenaustauschverfahren oder einer Umkehrosmose unterwirft.

2. Verfahren nach Anspruch 1, **dadurch gekennzeichnet, dass** man das Spülwasser im Schritt a) mit einer solchen Menge an wässriger Lösung von Ca(OH)₂ versetzt, dass es eine elektrische Leitfähigkeit von nicht mehr als 200 µS/cm, vorzugsweise von nicht mehr als 100 µS/cm aufweiset.

3. Verfahren nach einem oder beiden der Ansprüche 1 und 2, **dadurch gekennzeichnet, dass** die wässrige Lösung von Ca(OH)₂ im Schritt a) 0,01 bis 0,14 Gew.-% Ca(OH)₂ enthält.

4. Verfahren nach einem oder mehreren der Ansprüche 1 bis 3, **dadurch gekennzeichnet, dass** es sich bei dem Spülwasser um ein Spülwasser handelt, das bei der Spülung von Metalloberflächen anfällt, die nach einer Phosphatierung mit einer Zirkonium-haltigen Passivierungslösung behandelt wurden.

5. Verfahren nach einem oder mehreren der Ansprüche 1 bis 4, **dadurch gekennzeichnet, dass** das Spülwasser vor dem Schritt a) eine Zirkonium-Konzentration im Bereich von 0,5 bis 20 mg/l aufweist.

6. Verfahren nach einem oder mehreren der Ansprüche 1 bis 5, **dadurch gekennzeichnet, dass** das im Schritt c) erhaltene entsalzte Wasser für den Ansatz von Prozesslösungen oder für die Spülung von Metalloberflächen im Zuge eines Verfahrens zur Konversionsbehandlung verwendet wird.

## Claims

1. A method for obtaining deionised water from zirconium-containing rinsing water with a pH value of less than 6.0, wherein
a) the rinsing water is combined with such a quantity of an aqueous solution of Ca(OH)₂ containing no more than 0.1 wt.% of undissolved Ca(OH)₂ that the pH value of the rinsing water rises to a value in the range from 6.2 to 8.0,
b) any precipitate which forms is separated from the rinsing water and
c) the rinsing water, from which the precipitate has been removed in step b), is subjected to an ion exchange process or reverse osmosis.

2. A method according to claim 1, **characterised in that** the rinsing water in step a) is combined with such a quantity of aqueous Ca(OH)₂ solution that it exhibits an electrical conductivity of no more than 200 µS/cm, preferably of no more than 100 µS/cm.

3. A method according to one or both of claims 1 and 2, **characterised in that** the aqueous solution of Ca(OH)₂ in step a) contains 0.01 to 0.14 wt.% of Ca(OH)₂.

4. A method according to one or more of claims 1 to 3, **characterised in that** the rinsing water is a rinsing water as arises on rinsing metal surfaces which, after phosphating, have been treated with a zirconium-containing passivating solution.

5. A method according to one or more of claims 1 to 4, **characterised in that**, before step a), the rinsing water exhibits a zirconium concentration in the range from 0.5 to 20 mg/l.

6. A method according to one or more of claims 1 to 5, **characterised in that** the deionised water obtained in step c) is used for formulating process solutions or for rinsing metal surfaces in the course of a conversion treatment method.

## Revendications

1. Procédé pour la production d'eau déminéralisée à partir d'eau de rinçage contenant du zirconium présentant un pH inférieur à 6,0, où
a) on additionne l'eau de rinçage d'une quantité de solution aqueuse de Ca(OH)₂, qui ne contient pas plus de 0,1% en poids de Ca(OH)₂ non dissous, telle que le pH de l'eau de rinçage augmente à une valeur dans la plage de 6,2 à 8,0,
b) on sépare un précipité qui se forme de l'eau de rinçage et
c) on soumet l'eau de rinçage libérée dans l'étape b) du précipité à un procédé d'échange d'ions ou une osmose inverse.

2. Procédé selon la revendication 1, **caractérisé en ce qu'**on additionne l'eau de rinçage dans l'étape a) d'une quantité de solution aqueuse de Ca(OH)₂ telle qu'elle présente une conductibilité électrique qui n'est pas supérieure à 200 µS/cm, de préférence pas supérieure à 100 µS/cm.

3. Procédé selon l'une des revendications ou les deux revendications 1 et 2, **caractérisé en ce que** la solution aqueuse de Ca(OH)₂ dans l'étape a) contient 0,01 à 0,14% en poids de Ca(OH)₂.

4. Procédé selon l'une ou plusieurs des revendications 1 à 3, **caractérisé en ce qu'**il s'agit, pour l'eau de rinçage, d'une eau de rinçage qui est obtenue lors du rinçage de surfaces métalliques, qui sont traitées après une phosphatation avec une solution de passivation contenant du zirconium.

5. Procédé selon l'une ou plusieurs des revendications 1 à 4, **caractérisé en ce que** l'eau de rinçage présente, avant l'étape a), une concentration en zirconium dans la plage de 0,5 à 20 mg/l.

6. Procédé selon l'une ou plusieurs des revendications 1 à 5, **caractérisé en ce que** l'eau déminéralisée obtenue dans l'étape c) est utilisée pour commencer des solutions de procédé ou pour le rinçage de surfaces métalliques au cours d'un procédé pour le traitement de conversion.
